# EUROPÄISCHE PATENTANMELDUNG

(11) **EP 4 197 603 A1**
(43) Veröffentlichungstag der Anmeldung: **21.06.2023**
(21) Anmeldenummer: 22203786.3
(22) Anmeldetag: 26.10.2022
(51) Int. Cl.: A62B 35/00, D07B 1/14, H02G 1/02

(54) **SEILSYSTEM UND VERWENDUNG EINES SEILS**

(30) Priorität: 14.12.2021 DE 202021106782 U
(71) Anmelder: SKYLOTEC GmbH, 56566 Neuwied (DE)
(72) Erfinder: Mahr, Thorsten, 95145 Oberkotzau (DE)
(74) Vertreter: Michalski Hüttermann & Partner Patentanwälte mbB

(57) **Zusammenfassung**

Gegenstand der Erfindung ist ein Seilsystem (10) zur Sicherung von Personen gegen Absturz umfassend zumindest ein Seil (12) zur Anbringung zumindest einer Sorgleine und zumindest ein Halteelement (14.1, 14.2, 18.1, 18.2), wobei das zumindest eine Seil (12) dem zumindest einen Halteelement (14.1, 14.2, 18.1, 18.2) zugeordnet ist, und das Seil (12) zumindest ein elektrisches Heizmittel (22) zur Erwärmung des Seils (12) umfasst.

## Beschreibung

### Technisches Gebiet

Die Erfindung betrifft ein Seil zur Anbringung einer Sorgleine, ein Seilsystem mit dem Seil und die Verwendung des Seils in dem Seilsystem.

Seilsysteme sind aus dem Stand der Technik allgemein bekannt. So offenbart DE 10 2018 103565 A1 eine Vorrichtung zur Sicherung von Personen gegen Absturz, insbesondere von einem Dach, umfassend eine an einem Untergrund befestigbare Fußplatte, ein von dieser Fußplatte nach oben ragendes Stützrohr und im oberen Endbereich des Stützrohrs angeordnete Mittel zur Anbringung eines Seiles, durch welches die Person gegen Absturz gesichert wird.

Nachteilig an den bekannten Seilsystemen ist, dass diese Wind und Wetter ausgesetzt sind und insbesondere bei kalten Temperaturen schnell vereisen oder mit Schnee bedeckt sind. Die Sicherheit durch das Seilsystem kann mitunter nicht mehr gewährleistet werden oder vor den Arbeiten, die durch das Seilsystem geschützt werden sollen, muss das Seilsystem von Schnee und Eis befreit werden.

### Beschreibung der Erfindung

Aufgabe der Erfindung ist es daher, ein verbessertes Seilsystem zur Verfügung zu stellen. Insbesondere ist es Aufgabe der Erfindung ein Seilsystem zur Verfügung zu stellen, das bei jeder Witterung nutzbar ist.

Die Aufgabe der Erfindung wird durch die Merkmale der unabhängigen Ansprüche gelöst. Vorteilhafte Ausgestaltungen sind in den Unteransprüchen angegeben.

Die Aufgabe wird erfindungsgemäß gelöst mittels eines Seilsystems zur Sicherung von Personen gegen Absturz umfassend zumindest ein Seil zur Anbringung zumindest einer Sorgleine und zumindest ein Halteelement, wobei das zumindest eine Seil dem zumindest einen Halteelement zugeordnet ist, wobei das Seil zumindest ein elektrisches Heizmittel zur Erwärmung des Seils umfasst.

Weiterhin wird die Aufgabe erfindungsgemäß gelöst mittels einer Verwendung eines Seils, das zumindest ein elektrisches Heizmittel umfasst, in einem oben genannten Seilsystem.

Es wird ein Seilsystem zur Sicherung von Personen gegen Absturz vorgeschlagen, das zumindest ein Seil zur Anbringung zumindest einer Sorgleine und zumindest ein Halteelement umfasst, wobei das zumindest eine Seil dem zumindest einen Halteelement zugeordnet ist, wobei das Seil zumindest ein elektrisches Heizmittel zur Erwärmung des Seils umfasst.

Bevorzugt ist das Seilsystem ein Anschlagssystem nach DIN EN 795:2012-10 Typ C oder ein Steigschutzsystem nach DIN EN 353-1:2018-03.

Für das vorgeschlagene Seilsystem wird ein Seil zur Anbringung einer Sorgleine vorgeschlagen, welches bevorzugt zumindest eine Mehrzahl von Litzen und zumindest ein elektrisches Heizmittel umfasst.

Eine Sorgleine im Sinne der Erfindung ist ein Verbindungsmittel bevorzugt nach DIN EN 354:2010-11, DIN EN 362:2008-09 und/oder DIN EN 566:2017-05, das zwischen dem Seilsystem und einem Benutzer angeordnet ist. Bevorzugt ist die Sorgleine eine persönliche Schutzausrüstung. Bevorzugt umfasst die Sorgleine einen Falldämpfer, bevorzugt nach DIN EN 355:2002-09. Bevorzugt ist die Sorgleine nicht Bestandteil des Seilsystems und kann an diesem angebracht werden. Weiter bevorzugt ist die Sorgleine an dem Seil anbringbar.

Das Seil umfasst bevorzugt eine Mehrzahl von Litzen beziehungsweise Kardeele. In einer Ausgestaltung ist vorgesehen, dass die Litzen des Seils geschlagen, geflochten oder gewebt sind. Das Seil kann im Wesentlichen rund, insbesondere geschlagen oder geflochten, oder im Wesentlichen flach, insbesondere geflochten oder gewebt, ausgeführt sein. Im Fall eines flach geflochtenen oder gewebten Seils kann dieses als Band oder Gurt angesprochen werden.

Der Begriff "im Wesentlichen" gibt einen Toleranzbereich an, der für den Fachmann unter wirtschaftlichen und technischen Gesichtspunkten zu vertreten ist, so dass das entsprechende Merkmal noch als solches zu erkennen oder verwirklicht ist.

In einer Ausgestaltung umfasst das Seil zumindest ein Material ausgewählt aus einer Gruppe umfassend Stahldraht, Naturfasern und/oder Kunststofffasern. Bevorzugt ist das Seil ein Stahlseil, weiter bevorzugt umfassend Edelstahl.

In einer weiteren Ausgestaltung umfasst das Seil eine Einlage beziehungsweise Seele. In einer Ausgestaltung ist vorgesehen, dass das Seil eine Einlage aus Naturfasern aufweist, die mit Stahllitzen umschlagen ist.

Das Seil umfasst ein elektrisches Heizmittel. In einer Ausgestaltung ist vorgesehen, dass das elektrische Heizmittel ein Heizgeflecht, ein Heizkabel oder ein Heizband umfasst. Das elektrische Heizmittel umfasst insbesondere eine oder eine Mehrzahl von Adern durch die Strom geleitet wird, um elektrischer Energie in Wärmeenergie zu wandeln. Das Heizgeflecht ist bevorzugt ein metallisches Geflecht. Das Heizkabel umfasst bevorzugt zumindest eine Ader zur Energieumwandlung. Bevorzugt ist das Heizband ein flach gewebtes metallisches Band. Bevorzugt umfasst das Heizmittel zumindest ein Material ausgesucht aus einer Gruppe umfassend Kupfer, Nickel und/oder ein Legierung umfassend Kupfer und/oder Nickel.

In einer Ausgestaltung ist vorgesehen, dass das elektrische Heizmittel die Litzen ummantelt. Bevorzugt werden die Litzen von einem Heizgeflecht ummantelt.

In Sinne der Erfindung kann unter einer Ader auch ein Heizgeflecht verstanden werden.

In einer Ausgestaltung ist vorgesehen, dass das elektrische Heizmittel eine von den Litzen umschlagene Einlage bildet. Bevorzugt kann ein Heizkabel als Einlage verwendet werden.

In einer Ausgestaltung ist das Heizmittel ein selbstbegrenzendes beziehungsweise selbst temperaturregelndes Heizmittel. In einer Ausgestaltung ist vorgesehen, dass das Heizmittel zwei elektrisch leitende Adern aufweist, die zumindest teilweise über ihre Länge mittels eines Kaltleiters elektrisch verbunden sind. Insbesondere wird ein elektrischer Widerstand des Kaltleiters bei steigender Temperatur hochohmiger. Bevorzugt ist der das Heizmittel mit Kaltleiter derart eingestellt, dass bei etwa 3°C bis etwa 10°C, bevorzugt bei 4°C bis etwa 7°C im Wesentlichen kein Strom mehr zwischen den Adern fließt. In einer Ausgestaltung ist vorgesehen, dass der Kaltleiter ein Kunststoff-Kohlenstoff-Gefüge ist. Vorteilhaft an der Ausgestaltung des selbstregulierenden Heizmittels ist, dass die Wärme nur dann erzeugt wird, wenn diese benötigt ist, ohne eine aufwendige elektronische Regelung zu verwenden. Weiterhin vorteilhaft an dem selbstregulierenden Heizmittel ist, dass dieses die Wärme an genau den Stellen erzeugt, an denen sie gebraucht wird. So kann ein der Witterung ausgesetzter Abschnitt des Seiles eine stärkere Heizleistung benötigen, um diesen frostfrei zu halten, als ein geschützter Abschnitt. Durch den Kaltleiter, der zwischen den zumindest zwei Adern angeordnet ist, kann eine lokal höhere Stromdichte und somit eine erhöhte Wärmeleistung erfolgen.

In einer Ausgestaltung ist vorgesehen, dass zwischen dem elektrischen Heizmittel und den Litzen eine erste Isolierschicht zur elektrischen Isolierung angeordnet ist. Bevorzugt umfasst eine Isolierschicht zur elektrischen Isolierung zumindest ein Material ausgesucht aus einer Gruppe umfassend Polypropylen, Polyethylen, thermoplastische Elastomere, Gummi, Kautschuk und/oder Silikone.

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet, insbesondere ist ein Toleranzbereich von ±20 %, bevorzugt ±10 %, weiter bevorzugt ±5 % vorgesehen.

Soweit verschiedene Wertebereiche, beispielsweise bevorzugte und weiter bevorzugte Wertebereiche, in der vorliegenden Erfindung angegeben sind, sind die Untergrenzen und die Obergrenzen der verschiedenen Wertebereiche miteinander kombinierbar.

In einer Ausgestaltung ist vorgesehen, dass das Seil einen äußeren Schutzmantel zum Schutz vor Feuchtigkeit umfasst. Bevorzugt umfasst der Schutzmantel zumindest ein Material ausgesucht aus einer Gruppe umfassend Polypropylen, Polyethylen, thermoplastische Elastomere, Gummi, Kautschuk und/oder Silikone. Bevorzugt umhüllt der Schutzmantel das Seil im Wesentlichen über seine volle Länge.

In einer Ausgestaltung ist vorgesehen, dass zwischen dem elektrischen Heizmittel und dem Schutzmantel eine zweite Isolierschicht angeordnet ist.

Beispielhaft ist das Seil ein Drahtseil aus Edelstahldraht mit etwa sechs Litzen und einer Einlage aus einem Naturfaserstoff. Um die geschlagenen Litzen ist beispielsweise eine erste Isolierschicht angebracht, insbesondere aufgespritzt. Über der Isolierschicht ist beispielsweise ein Heizmittel, ausgestaltet als Heizgeflecht angebracht. Das Heizmittel umschließt die geschlagenen Litzen in einem Querschnitt insbesondere vollständig. Auf dem Heizmittel ist eine zweite Isolierschicht aufgebracht, die das Heizmittel elektrisch und mechanisch von dem darüber liegenden Schutzmantel trennt.

Beispielhafte Aufzählungen sind im Sinne der Erfindung als nicht abschließend anzusehen, sondern können im Rahmen des allgemeinen Fachwissens ergänzt werden.

Das Seilsystem umfasst insbesondere eine Stromversorgung. Insbesondere umfasst die Stromversorgung einen Gleichstromtransformator. Bevorzugt wird das Heizmittel mittels der Stromversorgung bevorzugt mit Gleichstrom versorgt.

Es wird ein Seilsystem umfassend ein oben beschriebenes Seil und zumindest ein Halteelement vorgeschlagen, wobei das Seil zumindest an dem zumindest einen Halteelement zugeordnet, befestigt, angeordnet, montiert oder mit diesem verspannt ist. Das Halteelement ist bevorzugt derart ausgestaltet, dass das Seil an diesem verspannbar ist. Insbesondere ist zumindest ein Ende des Seils am Halteelement angeordnet, befestigt oder montiert, bevorzugt derart, dass eine Kraft durch das Seil auf das Halteelement übertragbar ist. Bevorzugt ist ein Spannmittel zwischen Seil und Halteelement vorgesehen. Weiter bevorzugt ist ein Energieabsorber zwischen Seil und Halteelement vorgesehen. Das Halteelement umfasst in einer Ausgestaltung einen Pfosten. Bevorzugt umfasst das Halteelement eine Befestigungsvorrichtung, die beispielsweise als Öse ausgestaltet sein kann. Insbesondere ist das Befestigungsmittel zumindest zur Befestigung des Seiles, des Energieabsorbers und/oder des Spannmittels ausgestaltet. In einer weiteren Ausgestaltung umfasst das Halteelement eine Ankerplatte, bevorzugt zur Befestigung des Halteelements an einer Gebäudestruktur. Weiterhin ist beispielsweise die Ankerplatte an einer Gebäudestruktur befestigbar, beispielsweise verschraubbar. Beispielsweise umfasst das Halteelement eine Ankerplatte, an der bevorzugt das Befestigungsmittel angeordnet ist. Weiter bevorzugt ist das zumindest eine Halteelement mit einem Untergrund oder einer Gebäudestruktur verbindbar. Eine Gebäudestruktur kann beispielsweise eine Mauer, ein Balken, ein Überhang, eine Decke oder ein Dach sein. Beispielsweise umfasst das Halteelement ein mit dem Untergrund verschraubbaren Pfosten, der ein Befestigungsmittel umfasst, dem das Seil zuordenbar beziehungsweise an dem das Seil befestigbar oder spannbar ist. Weiterhin kann das Halteelement beispielsweise einen Teppich umfassen, wobei das Halteelement mittels einer Schüttung auf dem Teppich gehalten ist.

Bevorzugt ist das Halteelement ein Endhalteelement, dem weiter bevorzugt zumindest ein Ende des Seils zuordenbar ist. Weiter bevorzugt weist das Endhalteelement eine Öse auf, an der das Seil, ein Spannmittel und/oder ein Energieabsorber befestigbar ist. In einer Ausgestaltung weist das Endhalteelement eine Mehrzahl von Befestigungsmitteln auf. Beispielsweise umfasst das Endhalteelement zwei Befestigungsmittel, an denen beide Enden des Seils befestigbar sind. Weiter bevorzugt weist das Halteelement eine zwei, drei, vier oder mehr als vier Befestigungsmittel auf, an denen bevorzugt eine Mehrzahl von Seilen befestigbar sind. Bevorzugt wird das Seil zwischen zwei Endhalteelementen verspannt. Alternativ kann das Seil auch derart geführt sein, dass dieses an einem Endhalteelement verspannt ist.

Zur Führung des Seils ist bevorzugt ein Halteelement vorgesehen, dass als Zwischenhalteelement ausgestaltet ist. In einer Ausgestaltung ist vorgesehen, dass das Seil über oder durch zumindest ein Zwischenhalteelement geführt ist. Das Zwischenhalteelement reduziert bevorzugt ein Durchhängen des Seils. Weiterhin bevorzugt wirkt das Zwischenhalteelement als grade oder gewinkelte Führung. Weiter bevorzugt ist das Seil mittels eines Zwischenhalteelements abgewinkelt führbar. Insbesondere ist das Zwischenhalteelement als Eckhalteelement ausgestaltet, bevorzugt zur abgewinkelten Führung des Seiles. Bevorzugt ist vorgesehen, dass das Zwischenhalteelement überfahrbar ist. Insbesondere ist ein überfahrbares Zwischenhalteelement derart ausgestaltet, dass ein Gleiter oder Karabiner, mit dem die Sorgleine an dem Seil befestigt ist, über das Zwischenhalteelement gleiten kann, ohne dass ein Benutzer sich in Seilrichtung hinter dem Zwischenhalteelement neu an dem Seil befestigen muss. Das zumindest eine Zwischenhalteelement kann einen einem Pfosten oder eine Ankerlatte aufweisen, die an einem Untergrund oder einer Gebäudestruktur befestigbar ist. Bevorzugt weist das Zwischenhalteelement ein Befestigungsmittel auf, welches das Seil hält. Bevorzugt ist das Befestigungsmittel des Zwischenhalteelementes eine Öse, ein Rohr oder ein anderes Mittel zur Befestigung des Seils.

In einer Ausgestaltung ist vorgesehen, dass das Seil derart über eine Anzahl beziehungsweise Vielzahl von Zwischenhalteelementen geführt ist, insbesondere so dass beide Enden des Seiles am gleichen Endhalteelement befestigbar sind. Insbesondere ist das Seil mittels Eckhalteelemente mehrfach abgewinkelt beziehungsweise jeweils um eine Ecke geführt, um beispielsweise mit beiden Enden an demselben Endhalteelement befestigt zu sein.

Vorteilhaft verhindert das beheizbare Seil ein Festfrieren einer Mechanik der Zwischenhalteelemente, die ein Überfahren eines Gleiters oder eines Karabiners ermöglicht. Weiter vorteilhaft verhindert das beheizbare Seil ein Festfrieren des Gleiters am Seil.

In einer Ausgestaltung ist vorgesehen, dass das Seilsystem eine Steuerung oder eine Regelung zur Einstellung einer Soll-Temperatur des Heizmittels umfasst. Insbesondere umfasst die Soll-Temperatur, eine minimale Temperatur, die das Seil aufweisen soll.

In einer Ausgestaltung ist vorgesehen, dass die Steuerung oder Regelung zumindest einen Temperatursensor umfasst. In einer Ausgestaltung ist vorgesehen, dass der zumindest eine Temperatursensor am Seil, an einem Halteelement, beispielsweise am zumindest einen Endhalteelement oder an einem Zwischenhalteelement, angeordnet ist. Bevorzugt wird der zumindest eine Temperatursensor an einem Punkt an dem Seilsystem oder an einem Bauwerk angebracht, an dem die geringste Temperatur zu erwarten ist. In einer weiteren Ausgestaltung ist vorgesehen, dass der zumindest eine Temperatursensor die Temperatur des Seiles an einer oder mehreren Stellen misst. In einer Ausgestaltung ist vorgesehen, dass der zumindest eine Temperatursensor zumindest eine Umgebungstemperatur misst.

In einer weiteren Ausgestaltung ist vorgesehen, dass mittels einer Widerstandsmessung zumindest einer Ader, beispielsweise des Heizgeflechtes, des Heizmittels eine Regelgröße ermittelbar ist. Insbesondere ist die Temperatur des Heizmittels beziehungsweise des Seils mittels einer Widerstandsmessung ermittelbar.

Bevorzugt umfasst die Steuerung oder die Regelung eine Recheneinheit, insbesondere zur Auswertung von Signalen des Temperatursensors und zur Ansteuerung des Heizmittels.

In einer beispielhaften Ausgestaltung ist vorgesehen, dass das Seilsystem ein Seil und zwei Endhalteelemente aufweist, die einen Pfosten umfassen. Die Pfosten sind auf einem Untergrund, beispielsweise auf einem Flachdach, anbringbar. Beispielsweise wird das Seil zwischen den Endhalteelementen gespannt und mittels Zwischenhalteelementen vor zu starkem Durchhängen geschützt. Weiterhin sind Zwischenhalteelemente beispielsweise verwendbar, um das Seil abgewinkelt um eine Ecke zu führen, insbesondere wenn das Seilsystem als zumindest teilweise umlaufend ausgestaltet sein soll. Die Zwischenhalteelemente umfassen beispielsweise ebenfalls einen Pfosten und halten das Seil in der gleichen Höhe, wie die Endhalteelemente. Beispielsweise können die Zwischenhalteelemente auch zumindest teilweise an vertikalen Gebäudestrukturen angeordnet sein, beispielsweise einer Mauer. Das beispielhafte Seilsystem umfasst ein Seil mit einem Heizgeflecht, das um geschlagene Litzen aus V4A-Edelstahl angeordnet ist. Die Litzen sind vom Heizgeflecht mittels einer ersten Isolierschicht elektrisch getrennt. Zum Feuchtigkeitsschutz umfasst das Seil beispielsweise einen Schutzmantel, beispielsweise aus Polyethylen. Beispielsweise ist eine zweite Isolierschicht vorgesehen, um das Heizgeflecht von dem Schutzmantel elektrisch und mechanisch zu trennen.

Beispielsweise ist vorgesehen, dass das Seilsystem eine Regeleinheit aufweist, die beispielsweise mittels einer Widerstandsmessung des Heizmittels eine Regelgröße ermittelt, die insbesondere eine Temperatur des Seils wieder gibt. Abhängig von der gemessenen Regelgröße wird das Heizmittel mit einer Führungsgröße, beziehungsweise eines bestimmten elektrischen Stromes, angesteuert. Vorteilhaft ist das Seil auf diese Weise derart geheizt, dass auch bei einer Umgebungstemperatur unter 0°C dieses stetig über 0,5°C, bevorzugt über 3°C warm ist.

Weiterhin wird eine Verwendung eines Seils, das zumindest ein elektrisches Heizmittel umfasst, in einem Seilsystem vorgeschlagen. Weiterhin wird eine Verwendung eines oben beschriebenen Seils in einem oben beschriebenen Seilsystem zur Verhinderung von Eis und Schnee auf dem Seil vorgeschlagen. Insbesondere ist eine Verwendung des Seils in einem horizontalen oder vertikalen Seilsystem vorgesehen. Weiterhin ist eine Verwendung eines oben beschriebenen Seilsystems als Auffangschutz oder Rückhaltesicherung vorgesehen.

### Kurze Beschreibung der Zeichnungen

Weitere vorteilhafte Ausgestaltungen gehen aus den nachfolgenden Zeichnungen hervor. Die dort dargestellten Weiterbildungen sind jedoch nicht beschränkend auszulegen, vielmehr können die dort beschriebenen Merkmale untereinander und mit den oben beschriebenen Merkmalen zu weiteren Ausgestaltungen kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen:
Fig. 1 ein schematische Ansicht eines Seilsystems;
Fig. 2 eine schematische Ansicht eines Seils; und
Fig. 3 eine schematische Ansicht einer Stromversorgung.

### Detaillierte Beschreibung der Ausführungsbespiele

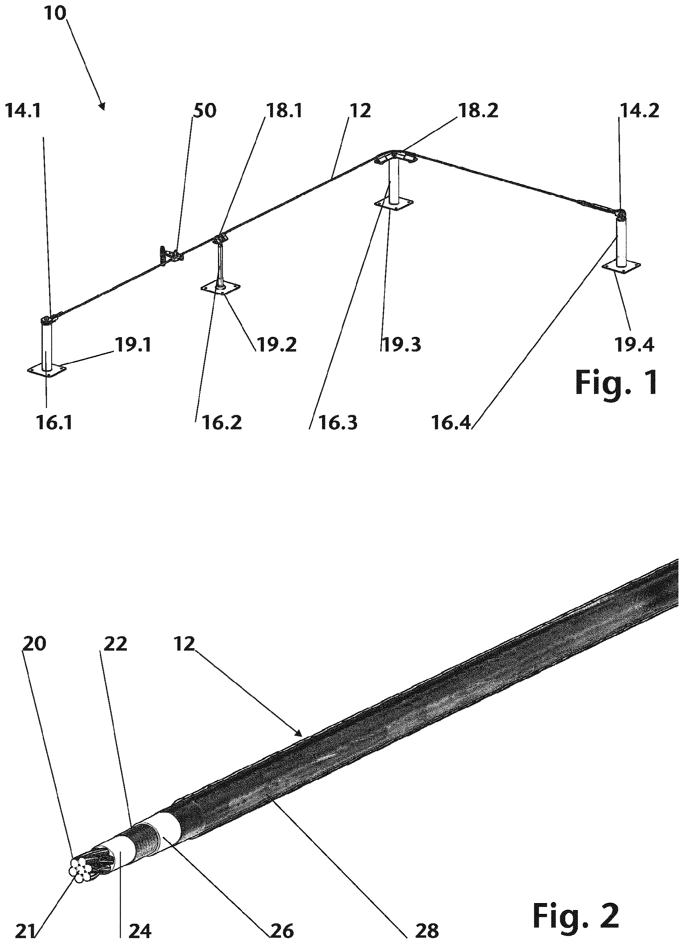

Fig. 1 zeigt ein Seilsystem 10 umfassend ein Seil 12, das zwischen zwei Halteelementen 14.1 und 14.2 gespannt ist. Die Halteelemente 14.1 und 14.2 sind auf Säulen 16.1 und 16.4 angeordnet, die mit einem Untergrund, der nicht bezeichnet ist, verbunden sind. Zwischenhalteelementen 18.1 bis 18.3 verhindern ein Durchhängen des Seiles 12. Zudem ist das Zwischenhalteelement 18.3 derart ausgestaltet, dass das Seil 12 um eine Ecke führbar ist. Weiterhin sind die Zwischenhalteelemente 18.2 und 18.3 auf Säulen 16.2 und 16.3 angeordnet. Das Zwischenhalteelement 18.1 ist an einer vertikalen Gebäudestruktur, beispielsweise einer Mauer, anbringbar, die der Übersichtlichkeit halber nicht eingezeichnet ist.

Fig. 2 zeigt ein Seil 12 mit geschlagenen Litzen 20 über denen ein Heizmittel 22 angeordnet ist, das als Heizgewebe ausgestaltet ist. Das Heizmittel 22 ist von den Litzen mittels einer ersten Isolierschicht 24 elektrisch und mechanisch getrennt. Mittels einer zweiten Isolierschicht 26 ist das Heizmittel 22 von einem Schutzmantel 28 aus Polyethylen getrennt.

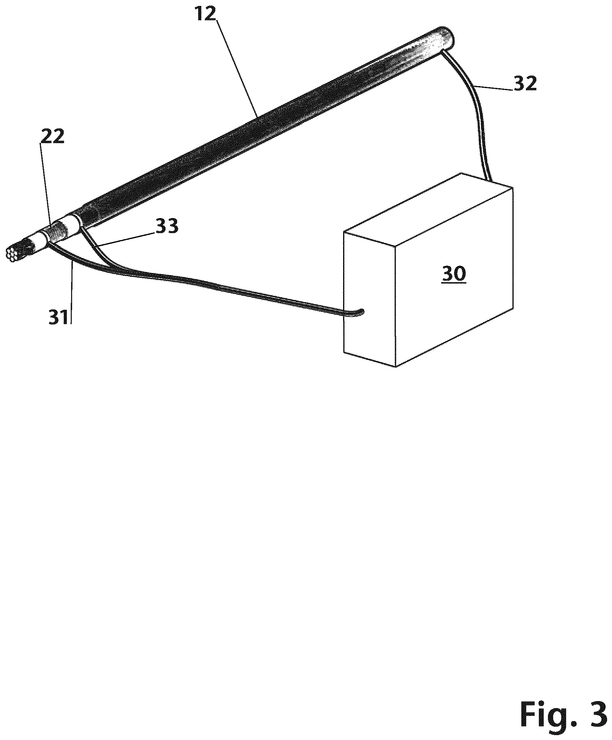

Fig. 3 zeigt schematisch die Anbindung des Seils 12 an einer Stromversorgung 30. Mittels zweier Kabel 31, 32, die im Wesentlichen an beiden Enden des Heizmittels 22 angeordnet sind, wird Strom durch das Heizmittel 22 geleitet, so dass dieses erwärmbar ist. Eine Erdung 33 ist zur Sicherheit ebenfalls an dem Seil 12 angebracht.

Mit dem vorgeschlagenen Seil 12 und dem Seilsystem 10 kann vorteilhaft ein gefrieren des Seils 12 und insbesondere eine Ablagerung von Eis und Schnee auf dem Seil 12 verhindert werden.

Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Seilsystem (10) zur Sicherung von Personen gegen Absturz umfassend
zumindest ein Seil (12) zur Anbringung zumindest einer Sorgleine und
zumindest ein Halteelement (14.1, 14.2, 18.1, 18.2), wobei
das zumindest eine Seil (12) dem zumindest einen Halteelement (14.1, 14.2, 18.1, 18.2) zugeordnet ist, und
das Seil (12) zumindest ein elektrisches Heizmittel (22) zur Erwärmung des Seils (12) umfasst.

2. Seilsystem (10) gemäß dem vorhergehenden Anspruch, wobei Litzen (20) des Seils (12) geschlagen, geflochten oder gewebt sind.

3. Seilsystem (10) gemäß einem oder mehreren der vorhergehenden Ansprüche, wobei das elektrische Heizmittel (22) ein Heizgeflecht, ein Heizkabel oder ein Heizband umfasst.

4. Seilsystem (10) gemäß einem oder mehreren der zwei vorhergehenden Ansprüche, wobei das elektrische Heizmittel (22) die Litzen (20) des Seils (12) ummantelt.

5. Seilsystem (10) gemäß einem oder mehreren der drei vorhergehenden Ansprüche, wobei das elektrische Heizmittel (22) eine von den Litzen (20) umschlagene Einlage (21) bildet.

6. Seilsystem (10) gemäß einem oder mehreren der drei vorhergehenden Ansprüche, wobei zwischen dem elektrischen Heizmittel (22) und den Litzen (20) eine erste Isolierschicht (24) zur elektrischen Isolierung angeordnet ist.

7. Seilsystem (10) gemäß einem oder mehreren der vorhergehenden Ansprüche, wobei das Seil (12) einen äußeren Schutzmantel (28) zum Schutz vor Feuchtigkeit umfasst.

8. Seilsystem (10) gemäß dem vorhergehenden Anspruch, wobei zwischen dem elektrischen Heizmittel (22) und dem Schutzmantel (28) eine zweite Isolierschicht (26) angeordnet ist.

9. Seilsystem (10) gemäß einem oder mehreren der vorhergehenden Ansprüche ,wobei das Heizmittel (22) zwei elektrisch leitende Adern aufweist, die zumindest teilweise über ihre Länge mittels eines Kaltleiters elektrisch verbunden sind.

10. Seilsystem (10) gemäß einem oder mehreren der vorhergehenden Ansprüche, wobei dieses eine elektrische Stromversorgung (30) zur Versorgung des Heizmittels (22) umfasst.

11. Seilsystem (10) gemäß einem oder mehreren der vorhergehenden Ansprüche, wobei dieses eine Steuerung oder eine Regelung zur Einstellung einer Soll-Temperatur des Heizmittels (22) umfasst.

12. Seilsystem (10) gemäß dem vorhergehenden Anspruch, wobei die Steuerung oder Regelung zumindest einen Temperatursensor umfasst.

13. Seilsystem (10) gemäß Anspruch 12 ,wobei der zumindest eine Temperatursensor am Seil (12) und/oder am Halteelement (14.1, 14.2, 18.1, 18.2) angeordnet ist.

14. Seilsystem (10) gemäß einem oder mehreren der drei vorhergehenden Ansprüche, wobei mittels einer Widerstandsmessung zumindest einer Ader des Heizmittels (22) eine Regelgröße ermittelbar ist.

15. Verwendung eines Seils (12), das zumindest ein elektrisches Heizmittel (22) umfasst, in einem Seilsystem (10) gemäß einem oder mehreren der vorhergehenden Ansprüche.
